# EUROPÄISCHE PATENTSCHRIFT

(11) **EP 3 637 211 B1**
(45) Veröffentlichungstag und Bekanntmachung des Hinweises auf die Patenterteilung: **29.11.2023**
(21) Anmeldenummer: 18200289.9
(22) Anmeldetag: 14.10.2018
(51) Int. Cl.: G05B 23/02, G05B 19/418

(54) **VERFAHREN ZUM BETREIBEN EINER ANLAGENVORRICHTUNG SOWIE ANLAGENVORRICHTUNG**
METHOD FOR OPERATING AN INSTALLATION AND INSTALLATION
PROCÉDÉ DE FONCTIONNEMENT D'UNE INSTALLATION AINSI QU'UNE INSTALLATION

(43) Veröffentlichungstag der Anmeldung: 15.04.2020
(73) Patentinhaber: Siemens Aktiengesellschaft, 80333 München (DE)
(72) Erfinder: Lutz, Benjamin, 76327 Pfinztal (DE)
(74) Vertreter: Siemens Patent Attorneys

(56) Entgegenhaltungen:
- EP-A1- 2 811 356
- WO-A1-2014/151574
- US-A1- 2013 099 916

## Beschreibung

Die Erfindung betrifft ein Verfahren zum Betreiben einer Anlagenvorrichtung mit zumindest einer ersten Anlageneinrichtung und zumindest einer zur ersten Anlageneinrichtung separaten zweiten Anlageneinrichtung, bei welchem von der ersten Anlageneinrichtung eine erste Fehlermeldung und von der zweiten Anlageneinrichtung eine zweite Fehlermeldung erzeugt werden und die erste Fehlermeldung und die zweite Fehlermeldung an eine elektronische Recheneinrichtung der Anlagenvorrichtung zum Überwachen der Anlagenvorrichtung übertragen werden. Ferner betrifft die Erfindung eine Anlagenvorrichtung mit zumindest einer ersten Anlageneinrichtung, mit zumindest einer zweiten Anlageneinrichtung und mit einer elektronischen Recheneinrichtung.

Eine Anlageneinrichtung in einer Anlagenvorrichtung kann für mehrere technologische Anlagenteile verantwortlich sein. So kann beispielsweise eine Operatorstation gleichzeitig die Prozessabbilder mehrerer Teilanlagen beziehungsweise Anlageneinrichtungen für das Bedienen und Beobachten bereitstellen oder eine Automatisierung mehrerer technischer Einrichtungen automatisieren. Bei einem Defekt einer Anlageneinrichtung kann somit die verfahrenstechnische Relevanz unterschiedlich schwerwiegend ausfallen. Je nachdem welche verfahrenstechnischen Anlagenteile diesem zugeordnet sind und in welchem Zustand, beispielsweise es läuft eine Charge beziehungsweise es läuft gerade keine Charge, sich der verfahrenstechnische Anlagenteil befindet, kann die verfahrenstechnische Relevanz entsprechend schwerwiegend sein.

Nach dem Stand der Technik sind in Leitsystemen von Anlagenvorrichtungen zwar Diagnoseinformationen zu entsprechenden Anlageneinrichtungen vorhanden, diese werden aber meist durch topographische Bäume und Meldelisten ohne eine verfahrenstechnische Relevanz angeboten und auch meist ausschließlich durch Wartungspersonal und nicht durch Operatoren berücksichtigt. Insbesondere dann, wenn mehrere Geräte Fehler oder Wartungsbedarf melden, ist es schwierig eine entsprechende Fehlerbehebung durchzuführen, sodass der Einfluss auf den Verfahrensablauf am geringsten ist. Im ungünstigsten Fall wird dann beispielsweise mit der Fehlerbehebung der geringsten verfahrenstechnischen Relevanz begonnen.

In der EP 2 811 356 A1 ist ein Verfahren zur Reduktion von Prozessalarmen offenbart.

Aufgabe der vorliegenden Erfindung ist es, ein Verfahren sowie eine Anlagenvorrichtung zu schaffen, mittels welcher die Anlagenvorrichtung zuverlässiger betrieben werden kann.

Diese Aufgabe wird durch zwei Verfahren sowie durch eine Anlagenvorrichtung gemäß den unabhängigen Patentansprüchen gelöst. Vorteilhafte Ausgestaltungsformen sind in den abhängigen Patentansprüchen angegeben.

Ein Aspekt der Erfindung betrifft ein Verfahren zum Betreiben einer Anlagenvorrichtung, die als Erzeugungsanlage zum Erzeugen eine Produkts ausgebildet ist, mit zumindest einer ersten Anlageneinrichtung und zumindest einer zur ersten Anlageneinrichtung separaten zweiten Anlageneinrichtung, bei welchem von der ersten Anlageneinrichtung eine erste Fehlermeldung und von der zweiten Anlageneinrichtung eine zweite Fehlermeldung erzeugt werden und die erste Fehlermeldung und die zweite Fehlermeldung an eine elektronische Recheneinrichtung der Anlagenvorrichtung zum Überwachen der Anlagenvorrichtung übertragen werden.

Es ist vorgesehen, dass von der elektronischen Recheneinrichtung in Abhängigkeit eines Entscheidungskriteriums, wobei als Entscheidungskriterium ein aktueller Erzeugungsschritt, in welchem sich das Produkt befindet, bestimmt wird, überprüft wird, ob die erste Anlageneinrichtung und die zweite Anlageneinrichtung zum Erzeugen des Produkts weiterhin benötigt werden und abhängig davon eine erste Verfahrensrelevanz und eine zweite Verfahrensrelevanz bestimmt werden, und wobei von der elektronischen Recheneinrichtung zumindest die erste Verfahrensrelevanz der ersten Anlageneinrichtung und die zweite Verfahrensrelevanz der zweiten Anlageneinrichtung zugewiesen werden und in Abhängigkeit der jeweiligen zugewiesenen Verfahrensrelevanz eine Priorisierung der jeweiligen Fehlermeldung erzeugt wird.

Mit anderen Worten werden die verfahrenstechnischen Anlageneinrichtungen in jeweiliger Relation zueinander gebracht, sodass in Abhängigkeit der jeweiligen erzeugten Fehlermeldungen, die priorisiert werden können und dadurch verbessert eine Reparatur oder Wartung der jeweiligen Anlageneinrichtungen durchgeführt werden kann, so dass nur eine geringe Einschränkung der Anlagenvorrichtung zu verzeichnen ist. Somit wird eine Architektur und eine Implementierung erzeugt, anhand derer dynamisch, insbesondere zur Laufzeit der Anlagenvorrichtung, die verfahrenstechnische Relevanz der Fehlermeldungen ermittelt und zwecks Koordination der Behebung und der Bedienung und Beobachtung graphisch zugänglich gemacht werden kann. Operatoren, welche als Bediener der Anlagenvorrichtung angesehen werden können, der Anlagen, wie auch Wartungspersonal, können auf dieser Grundlage die Bedienung und Beobachtung, als auch die Wartung der laufenden verfahrenstechnischen Anlageneinrichtungen effizienter gestalten und somit Produktionsausfälle oder Produktionseinschränkungen vorbeugen.

Ferner hat dies den Vorteil, dass bei der Bedienung und Beobachtung durch einen Operator der Anlagenvorrichtung unmittelbar gerätespezifische Einschränkungen mit Auswirkung auf die Verfahrenstechnik eingesehen werden können und entsprechend danach eine Fehlerbehebung durchgeführt werden kann. Ferner kann auch das erfindungsgemäße Verfahren dafür vorgesehen sein, dass das Wartungspersonal die Behebung von Gerätefehlern besser Priorisieren kann und besser koordinieren kann, insbesondere im Hinblick auf verfahrenstechnische Seiteneffekte eines jeweiligen Gerätefehlers beziehungsweise einer jeweiligen Fehlermeldung.

Die Anlagenvorrichtung ist als Erzeugungsanlage zum Erzeugen eines Produkts ausgebildet und als Entscheidungskriterium wird ein aktueller Erzeugungsschritt bestimmt, in welchem sich das Produkt befindet, wobei in Abhängigkeit des aktuellen Erzeugungsschritts von der elektronischen Recheneinrichtung überprüft wird, ob die erste Anlageneinrichtung und/oder die zweite Anlageneinrichtung zum Erzeugen des Produkts weiterhin benötigt wird und abhängig davon die jeweilige Verfahrensrelevanz bestimmt wird. Mit anderen Worten wird die Verfahrensrelevanz dadurch entschieden, ob die erste Anlageneinrichtung und die zweite Anlageneinrichtung zur Produktion des Produkts noch weiterhin benötigt werden. Sollte beispielsweise zum Erzeugen des Produkts erst die erste Anlageneinrichtung benötigt werden und dann die zweite Anlageneinrichtung benötigt werden und ermittelt werden, dass sich das Produkt bereits in der zweiten Anlageneinrichtung befindet, wobei dann beispielsweise die erste Fehlermeldung von der ersten Anlageneinrichtung erzeugt wird und die zweite Fehlermeldung von der zweiten Anlageneinrichtung erzeugt wird, so kann beispielsweise vorgesehen sein, dass die zweite Verfahrensrelevanz für die zweite Anlageneinrichtung höher eingestuft wird, da die zweite Anlageneinrichtung zum Erzeugen des Produkts noch benötigt wird, während die erste Anlageneinrichtung nicht mehr benötigt wird. Dadurch ist es ermöglicht, dass in Abhängigkeit des aktuellen Herstellungsprozesses und insbesondere in Abhängigkeit des jeweiligen Erzeugungsschritts des aktuellen Erzeugungsprozesses die verfahrenstechnische Relevanz, mit anderen Worten die Verfahrensrelevanz, der jeweiligen Anlageneinrichtung überprüft wird und in Abhängigkeit des aktuellen Erzeugungsschritts dann der jeweiligen Anlageneinrichtung die Verfahrensrelevanz zugewiesen wird und die Priorisierung in Abhängigkeit davon durchgeführt wird. Dadurch ist es ermöglicht, dass Produktionsausfälle und Produktionseinschränkungen möglichst niedrig gehalten werden, wodurch ein verbesserter Betrieb der Anlagenvorrichtung ermöglicht ist.

In einer alternativen Ausführungsform der Erfindung nach Anspruch 2 wird als Entscheidungskriterium eine Bewertung der jeweiligen Anlageneinrichtung in Abhängigkeit einer Benutzungshäufigkeit der jeweiligen Anlageneinrichtung während des Erzeugungsprozesses des Produkts durchgeführt. Sollte beispielsweise festgestellt werden, dass die erste Anlageneinrichtung drei Mal während des gesamten Erzeugungsprozesses benötigt wird und die zweite Anlageneinrichtung nur einmal während des gesamten Erzeugungsprozesses benötigt wird, so kann dann der ersten Fehlermeldung eine höhere Verfahrensrelevanz zugewiesen werden als der zweiten Fehlermeldung. Insbesondere findet dann die Priorisierung derart statt, dass zur Reparatur der ersten Anlageneinrichtung dieser eine höhere Priorität zugewiesen wird als der zweiten Anlageneinrichtung. Somit kann in Abhängigkeit einer Benutzungshäufigkeit der jeweiligen Anlageneinrichtung entschieden werden, welche Anlageneinrichtung bei einer entsprechenden Fehlermeldung zuerst repariert beziehungsweise gewartet werden soll. Dadurch können Produktionseinschränkungen reduziert werden, wodurch ein verbesserter Betrieb der Anlagenvorrichtung realisiert werden kann.

Es hat sich weiterhin als vorteilhaft erwiesen, wenn die erste Fehlermeldung und/oder die zweite Fehlermeldung und/oder die erzeugte Priorisierung der Fehlermeldungen auf einer Anzeigeeinrichtung der elektronischen Recheneinrichtung angezeigt werden. Insbesondere ist es dadurch ermöglicht, dass beispielsweise ein Operator der Anlagenvorrichtung beziehungsweise ein Operator der elektronischen Recheneinrichtung die entsprechende Fehlermeldung beziehungsweise die erzeugte Priorisierung auf der Anzeigeeinrichtung angezeigt bekommt. Insbesondere kann dann vorgesehen sein, dass der Operator anhand der vorgeschlagenen Priorisierung durch die elektronische Recheneinrichtung entscheiden kann, welche Wartungsarbeiten beziehungsweise Reparaturen priorisiert durchgeführt werden sollen. Somit kann einem Operator auf einfache Art und Weise angezeigt werden, welche Anlageneinrichtungen zuerst gewartet beziehungsweise repariert werden sollen, um einem Produktionsausfall oder Produktionseinschränkungen entsprechend vorbeugen zu können. Dies führt zu einem verbesserten Betrieb der Anlagenvorrichtung.

Ferner hat es sich als vorteilhaft erwiesen, wenn die erste Fehlermeldung und/oder die zweite Fehlermeldung und/oder die Priorisierung der Fehlermeldung während eines Betriebs der Anlagenvorrichtung auf einer Anzeigeeinrichtung der elektronischen Recheneinrichtung angezeigt werden. Mit anderen Worten findet die entsprechende Anzeige in Echtzeit, beziehungsweise online, statt. Dadurch ist es ermöglicht, dass beispielsweise ein Operator, welcher vor der Anzeigeeinrichtung sitzt und den Erzeugungsprozess beobachtet, in Echtzeit angezeigt bekommt, welche Auswirkungen die entsprechenden Fehlermeldungen der Anlageneinrichtungen auf dem Produktionsprozess hat und kann insbesondere in Echtzeit schnell und zuverlässig in die Reparatur- und Wartungsarbeiten eingreifen, sodass ein zeitreduzierter Reparaturaufwand ermöglicht ist. Dadurch ist es ermöglicht, dass es zu geringeren Produktionsausfällen oder Produktionseinschränkungen der Anlagenvorrichtung gelangt. Dies führt zu einem verbesserten Betrieb der Anlagenvorrichtung.

In einer weiteren vorteilhaften Ausgestaltungsform wird zusätzlich ein erstes Piktogramm für die erste Anlageneinrichtung und ein zweites Piktogramm für die zweite Anlageneinrichtung auf der Anzeigeeinrichtung angezeigt, wobei die jeweilige Fehlermeldung und Priorisierung als zusätzliche Information des ersten Piktogramms und/oder des zweiten Piktogramms angezeigt werden. Mit anderen Worten kann beispielsweise vorgesehen sein, dass auf der Anzeigeeinrichtung eine Prozessanzeige mit den jeweiligen Anlageneinrichtungen angezeigt wird. Wenn dann die erste Fehlermeldung und/oder die zweite Fehlermeldung erscheint, so kann dies als zusätzliche Information zu dem jeweiligen Piktogramm der Anlageneinrichtungen angezeigt werden. Insbesondere kann auch die jeweilige Priorisierung entsprechend als zusätzliche Information zum ersten Piktogramm und/oder zum zweiten Piktogramm angezeigt werden. Sollte beispielsweise vorgesehen sein, dass der ersten Anlageneinrichtung eine höhere Priorität zugewiesen wird als der zweiten Anlageneinrichtung, so kann dies entsprechende durch das Piktogramm angezeigt werden. So kann beispielsweise vorgesehen sein, dass die Priorisierung entsprechend der ersten Anlageneinrichtung angezeigt werden kann. Beispielsweise kann die Priorisierung durch unterschiedliche Farben auf der Anzeige angezeigt werden. Beispielsweise kann vorgesehen sein, dass der höher priorisierten Anlageneinrichtung eine rote Farbe zugewiesen wird und der niedriger priorisierten Fehlermeldung eine gelbe Farbe zugewiesen wird. Somit ist dem Operator schnell ersichtlich, welcher Anlageneinrichtung eine höhere Priorisierung beziehungsweise Verfahrensrelevanz zugewiesen wurde. Ferner kann beispielsweise vorgesehen sein, dass durch Buchstaben beziehungsweise Zahlen die Priorisierung beziehungsweise die Verfahrensrelevanz angezeigt werden kann. Beispielsweise kann vorgesehen sein, dass mit der Zahl eins als zusätzliche Information der jeweiligen Anlageneinrichtung die höhere Verfahrensrelevanz zugewiesen wird und mit der Zahl zwei die niedrigere Verfahrensrelevanz angezeigt wird. Ebenfalls möglich ist, dass die entsprechende Verfahrensrelevanz mit Buchstaben, beispielsweise mit A für eine hohe Verfahrensrelevanz und B für eine niedrige Verfahrensrelevanz entsprechend als zusätzliche Information angezeigt wird. Dadurch ist es ermöglicht, dass einfach und zuverlässig ein Operator der elektronischen Recheneinrichtung beziehungsweise der Anzeigeeinrichtung angezeigt bekommt, welche Anlageneinrichtung eine entsprechend höhere zugewiesene Verfahrensrelevanz aufweist, sodass dieser einfach und schnell eine Reparatur beziehungsweise Wartung der jeweiligen Anlageneinrichtung durchführen lassen kann. Dies führt zu geringeren Produktionsausfällen und Produktionseinschränkungen, sodass ein verbesserter Betrieb der Anlagenvorrichtung realisiert werden kann.

Ebenfalls vorteilhaft ist, wenn in Abhängigkeit der Priorisierung die erste Fehlermeldung und/oder die zweite Fehlermeldung auf der Anzeigeeinrichtung ausgeblendet werden. Mit anderen Worten kann beispielsweise vorgesehen sein, dass lediglich die Fehlermeldung mit der hohen Verfahrensrelevanz entsprechend angezeigt wird, während die Fehlermeldung mit der niedrigen Verfahrensrelevanz ausgeblendet wird. Insbesondere ist es somit ermöglicht, dass beispielsweise, wie ein Alarm, die entsprechende Priorisierung angezeigt wird, sodass ein Operator vor der Anzeigeeinrichtung schnell und zuverlässig die entsprechende Reparatur beziehungsweise Wartungsarbeit an der jeweilig angezeigten Anlageneinrichtung durchführen kann. Somit kann intuitiv für den Operator die entsprechende Verfahrensrelevanz angezeigt werden. Dies führt zu geringeren Produktionsausfällen und Produktionseinschränkungen, sodass die Anlagenvorrichtung zuverlässiger betrieben werden kann.

Ferner hat es sich als vorteilhaft erwiesen, wenn die erste Fehlermeldung und/oder die zweite Fehlermeldung mittels eines jeweiligen Diagnosebaumes für jede Anlageneinrichtung ausgewertet werden. Dadurch kann beispielsweise realisiert werden, dass für jede der Anlageneinrichtungen eine detaillierte Aufschlüsselung in Form der Diagnosebäume dargestellt werden kann, welche bis auf die Feldebene herunter gebrochen werden kann. Mit diesen erweiterten Konfigurationen ist es insbesondere zur Laufzeit beziehungsweise online ermöglicht Fehlermeldungen für jede Automatisierung und für jede Operatorstation im Hinblick auf die verfahrenstechnische Relevanz zu berücksichtigen. Somit ist ein verbesserter Betrieb der Anlagenvorrichtung ermöglicht.

Ebenfalls vorteilhaft ist, wenn in Abhängigkeit der erzeugten Priorisierung eine dritte Anlageneinrichtung der Anlagenvorrichtung gestartet wird, wobei die erste Anlageneinrichtung und/oder die zweite Anlageneinrichtung im Betrieb der Anlagenvorrichtung durch die dritte Anlageneinrichtung ersetzt wird. Insbesondere ist somit die dritte Anlageneinrichtung als Alternative innerhalb der Anlagenvorrichtung vorgesehen. Beispielsweise kann dann bei einem "Batch" Vorgang, mit anderen Worten mittels eines Stapelverarbeitungsskriptes, die dritte Anlageneinrichtung entsprechend gestartet werden, wobei dann insbesondere für die dritte Anlageneinrichtung kein Gerätealarm vorliegt, sodass die dritte Anlageneinrichtung die erste Anlageneinrichtung und/oder die zweite Anlageneinrichtung ersetzen kann. Dadurch ist es ermöglicht, dass beim Betrieb der Anlagenvorrichtung es zu reduzierten Ausfällen kommt, da die dritte Anlageneinrichtung entsprechend die fehlerhafte erste Anlageneinrichtung und/oder die fehlerhafte zweite Anlageneinrichtung ersetzen kann. Insbesondere wird dann in Abhängigkeit der Priorisierung die dritte Anlageneinrichtung die erste Anlageneinrichtung oder die zweite Anlageneinrichtung ersetzen. Insbesondere wird die Anlageneinrichtung mit der höher priorisierten Verfahrensrelevanz entsprechend durch die dritte Anlageneinrichtung ersetzt. Dadurch ist es ermöglicht, dass Produktionsausfälle verringert werden, wodurch ein verbesserter Betrieb der Anlagenvorrichtung realisiert werden kann.

Ein weiterer Aspekt der Erfindung betrifft eine Anlagenvorrichtung mit zumindest einer ersten Anlageneinrichtung, mit zumindest einer zweiten Anlageneinrichtung und mit einer elektronischen Recheneinrichtung, wobei die Anlagenvorrichtung zum Durchführen eines Verfahrens nach einem der vorhergehenden Aspekte ausgebildet ist.

Vorteilhafte Ausgestaltungsformen des Verfahrens sind als vorteilhafte Ausgestaltungsformen der Anlagenvorrichtung anzusehen. Die Anlagenvorrichtung weist dazu gegenständliche Merkmale auf, welche eine Durchführung des Verfahrens oder eine vorteilhafte Ausgestaltungsform davon ermöglichen.

Weitere Merkmale und Vorteile sind der folgenden Beschreibung anhand der beigefügten Figuren zu entnehmen. In den Figuren bezeichnen gleiche Bezugszeichen gleiche Merkmale und Funktionen. Die Ausführungsbeispiele dienen lediglich der Erläuterung der Erfindung und sollen diese nicht beschränken.

Die Erfindung wird nun anhand der beigefügten Zeichnungen näher erläutert, in denen zeigen:
- FIG 1: eine schematische Ansicht einer Ausführungsform einer Anzeigeeinrichtung einer Ausführungsform einer Anlagenvorrichtung;
- FIG 2: eine weitere schematische Ansicht einer Ausführungsform einer Anzeigeeinrichtung einer Ausführungsform der Anlagenvorrichtung; und
- FIG 3: ein schematisches Blockdiagramm einer Ausführungsform der Anlagenvorrichtung.

Die nachfolgend näher geschilderten Ausführungsbeispiele stellen bevorzugte Ausführungsformen der vorliegenden Erfindung dar.

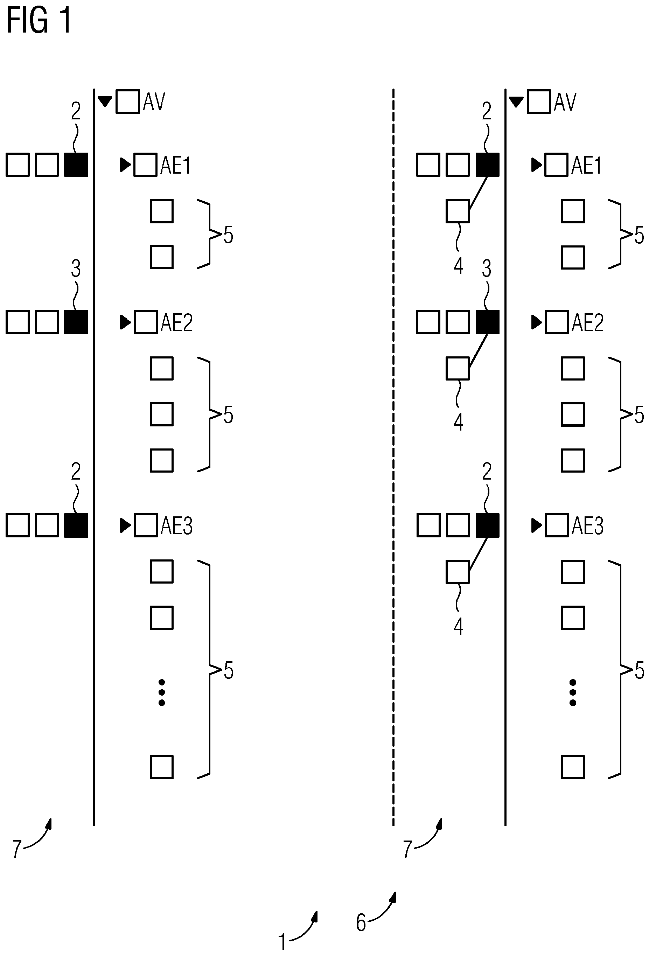

FIG 1 zeigt in einer schematischen Ansicht eine Ausführungsform einer Anzeigeeinrichtung 1 einer Ausführungsform einer Anlagenvorrichtung AV. Die Anlagenvorrichtung AV weist im vorliegenden Ausführungsbeispiel eine erste Anlageneinrichtung AE1, eine zweite Anlageneinrichtung AE2 und eine dritte Anlageneinrichtung AE3 auf. Im vorliegenden Ausführungsbeispiel sind jeweils zwei Möglichkeiten zur optischen Anzeige dargestellt. Auf der linken Seite der FIG 1 ist dargestellt, dass eine jeweilige Anlageneinrichtung AE1, AE2, AE3 jeweilige Fehlermeldungen 2, 3 zeigen können. Von der ersten Anlageneinrichtung AE1 kann eine erste Fehlermeldung 2 erzeugt werden, von der zweiten Anlageneinrichtung AE2 kann eine zweite Fehlermeldung 3 erzeugt werden und von der dritten Anlageneinrichtung AE3 kann im vorliegenden Ausführungsbeispiel eine dritte Fehlermeldung erzeugt werden, welche im Ausführungsbeispiel der ersten Fehlermeldung entspricht. Mit anderen Worten hat die erste Fehlermeldung 2 Einfluss auf die erste Anlageneinrichtung AE1 und auf die dritte Anlageneinrichtung AE3.

Mit anderen Worten werden die verfahrenstechnischen Anlageneinrichtungen AE1, AE2, AE3 in jeweiliger Relation zueinander gebracht, sodass in Abhängigkeit der jeweiligen erzeugten Fehlermeldungen 2, 3 diese priorisiert werden können und dadurch verbessert eine Reparatur oder Wartung der jeweiligen Anlageneinrichtungen AE1, AE2, AE3 durchgeführt werden kann, so dass nur eine geringe Einschränkung der Anlagenvorrichtung AV zu verzeichnen ist. Somit wird eine Architektur und eine Implementierung erzeugt, anhand derer dynamisch, insbesondere zur Laufzeit der Anlagenvorrichtung AV, die verfahrenstechnische Relevanz der Fehlermeldungen 2, 3 ermittelt und zwecks Koordination der Behebung und der Bedienung und Beobachtung graphisch zugänglich gemacht werden kann. Operatoren, welche als Bediener der Anlagenvorrichtung AV angesehen werden können, der Anlagen, wie auch Wartungspersonal, können auf dieser Grundlage die Bedienung und Beobachtung, als auch die Wartung der laufenden verfahrenstechnischen Anlageneinrichtungen AE1, AE", AE3 effizienter gestalten und somit Produktionsausfälle oder Produktionseinschränkungen vorbeugen.

Ferner hat dies den Vorteil, dass bei der Bedienung und Beobachtung durch einen Operator der Anlagenvorrichtung AV unmittelbar gerätespezifische Einschränkungen mit Auswirkung auf die Verfahrenstechnik eingesehen werden können und entsprechend danach eine Fehlerbehebung durchgeführt werden kann. Ferner kann auch das erfindungsgemäße Verfahren dafür vorgesehen sein, dass das Wartungspersonal die Behebung von Gerätefehlern besser Priorisieren 7 kann und besser koordinieren kann, insbesondere im Hinblick auf verfahrenstechnische Seiteneffekte eines jeweiligen Gerätefehlers beziehungsweise einer jeweiligen Fehlermeldung 2, 3.

Die jeweiligen Anlageneinrichtungen AE1, AE2, AE3 können mit Hilfe eines jeweiligen Diagnosebaumes 5 der jeweiligen Anlageneinrichtungen AE1, AE2, AE3 ausgewertet werden.

Es ist vorgesehen, dass zum Betreiben der Anlagenvorrichtung AV mit zumindest der ersten Anlageneinrichtung AE1 und der zumindest zur ersten Anlageneinrichtung AE1 separaten zweiten Anlageneinrichtung AE2 von der ersten Anlageneinrichtung AE1 die erste Fehlermeldung 2 und von der zweiten Anlageneinrichtung AE2 die zweite Fehlermeldung 3 erzeugt werden und die erste Fehlermeldung 2 und die zweite Fehlermeldung 3 an eine elektronische Recheneinrichtung 6 der Anlagenvorrichtung AV zum Überwachen der Anlagenvorrichtung AV übertragen werden. Es ist vorgesehen, dass von der elektronischen Recheneinrichtung 6 in Abhängigkeit eines Entscheidungskriteriums zumindest eine erste Verfahrensrelevanz der ersten Anlageneinrichtung AE1 und eine zweite Verfahrensrelevanz der zweiten Anlageneinrichtung AE2 zugewiesen werden und in Abhängigkeit der jeweilig zugewiesenen Verfahrensrelevanz eine Priorisierung 7 der jeweiligen Fehlermeldungen 2, 3 erzeugt wird.

FIG 1 zeigt hier beispielhaft die Erweiterung einer Equipmenthierarchie-online Konfiguration, wie es beispielsweise durch das Engineering beziehungsweise die Organisation bei einem Herstellungsprozess eines Produkts generiert wird, insbesondere zur Laufzeit, angewendet wird. Hierbei wird hinterlegt, welche verfahrenstechnischen Anlageeinrichtungen AE1, AE2, AE3, welche insbesondere in der Equipmenthierarchie-online durch Strukturordner repräsentiert sind, durch welche Geräte automatisiert und beobachtet werden.

FIG 1 zeigt nun, dass die Fehlermeldungen 2, 3 zur Ermittlung der verfahrenstechnischen Relevanz entsprechend eingeblendet werden können. Die Einblendung kann beispielsweise durch einen Operator durch Ausklappen, wie es auf der rechten Seite der FIG 1 angezeigt ist, erfolgen, oder durch Einklappen, wie es auf der linken Seite der FIG 1 zu sehen ist.

In FIG 1 ist auf der rechten Seite zu sehen, dass der jeweiligen Fehlermeldung 2, 3 eine weitere Information 4, zugewiesen wird. Insbesondere ist zu sehen, dass ein erstes Piktogramm und ein zweites Piktogramm für die zweite Anlageneinrichtung AE2 auf der Anzeigeeinrichtung 1 angezeigt werden, wobei die jeweilige Fehlermeldung 2, 3 und Priorisierung 7 als zusätzliche Information 4 des ersten Piktogramms und/oder des zweiten Piktogramms angezeigt werden.

Ferner zeigt die FIG 1, dass in Abhängigkeit der Priorisierung 7 die erste Fehlermeldung 2 und/oder die zweite Fehlermeldung 3 auf der Anzeigeeinrichtung 1 ausgeblendet werden kann.

Ferner ist in der FIG 1 gezeigt, dass in Abhängigkeit der erzeugten Priorisierung 7 in die dritte Anlageneinrichtung AE3 der Anlagenvorrichtung AV gestartet werden kann, wobei die erste Anlageneinrichtung AE1 und/oder die zweite Anlageneinrichtung AE2 in Betrieb der Anlagenvorrichtung AV durch die dritte Anlageneinrichtung AE3 ersetzt wird. Insbesondere ist somit die dritte Anlageneinrichtung AE3 als Alternative innerhalb der Anlagenvorrichtung AV vorgesehen. Beispielsweise kann dann bei einem "Batch" Vorgang, mit anderen Worten mittels eines Stapelverarbeitungsskriptes, die dritte Anlageneinrichtung AE3 entsprechend gestartet werden, wobei dann insbesondere für die dritte Anlageneinrichtung AE3 kein Gerätealarm vorliegt, sodass die dritte Anlageneinrichtung AE3 die erste Anlageneinrichtung AE1 und/oder die zweite Anlageneinrichtung AE2 ersetzen kann. Dadurch ist es ermöglicht, dass beim Betrieb der Anlagenvorrichtung AV es zu reduzierten Ausfällen kommt, da die dritte Anlageneinrichtung AE3 entsprechend die fehlerhafte erste Anlageneinrichtung AE1 und/oder die fehlerhafte zweite Anlageneinrichtung AE2 ersetzen kann. Insbesondere wird dann in Abhängigkeit der Priorisierung 7 die dritte Anlageneinrichtung AE3 die erste Anlageneinrichtung AE1 oder die zweite Anlageneinrichtung AE2 ersetzen. Insbesondere wird die Anlageneinrichtung AV mit der höher priorisierten Verfahrensrelevanz entsprechend durch die dritte Anlageneinrichtung AE3 ersetzt. Dadurch ist es ermöglicht, dass Produktionsausfälle verringert werden, wodurch ein verbesserter Betrieb der Anlagenvorrichtung realisiert werden kann.

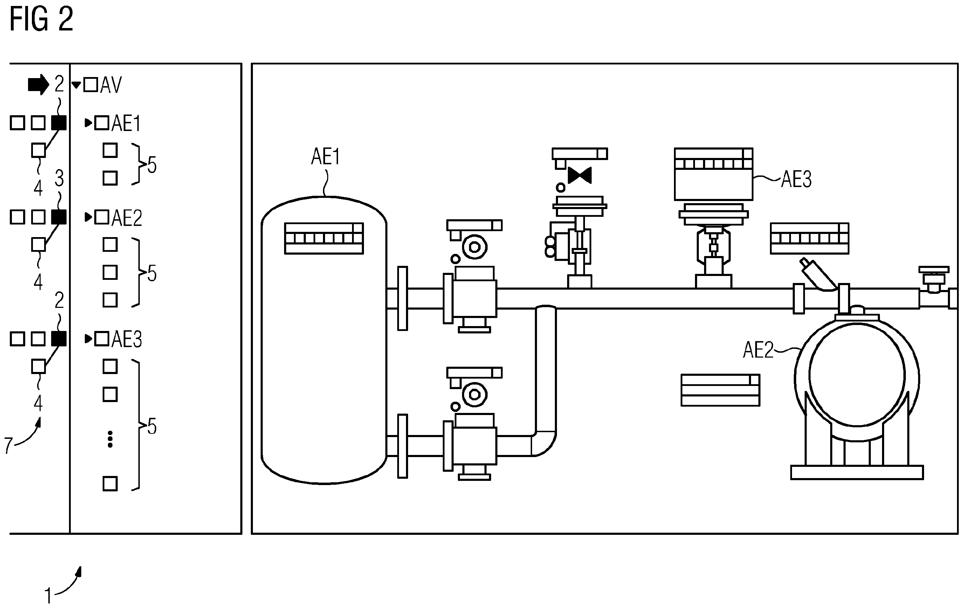

FIG 2 zeigt schematisch eine weitere Ausführungsform einer Anzeigeeinrichtung 1 einer Ausführungsform der Anlagenvorrichtung AV. Im vorliegenden Ausführungsbeispiel ist insbesondere die Integration der Equipmenthierarchie-online in einer Ansicht angezeigt. Insbesondere ist die Equipmenthierarchie-online mit den nun durch das erfindungsgemäße Verfahren möglichen eingeblendeten und zusammengefassten Fehlermeldungen 2, 3 mit der jeweiligen Darstellung einer Alarmquelle in Form der Anlageneinrichtung AE1, AE2, AE3, dargestellt. Es ist zu erkennen, dass gleichzeitig mehrere verfahrenstechnisch relevante Fehlermeldungen 2, 3 vorliegen, wobei der auf die erste Fehlermeldung 2 vorliegend schwerwiegender ist, da er sich auf zwei verfahrenstechnische Anlageneinrichtungen AE1, AE2, AE3 auswirkt. Dieser Fehler sollte demnach als erster angegangen werden. Darüber hinaus kann der Operator, hätte er beispielsweise die Alternative der dritten Anlageneinrichtung AE3, beispielsweise einem Batch Vorgang auf einem verfahrenstechnischen Anlagenteil starten, wenn die Fehlermeldung 2, 3 vorliegt.

Ferner zeigt die FIG 2 wie beispielsweise die Anzeigeeinrichtung 1 für den Operator zugänglich ist. Der Operator kann nun unmittelbar bei der Bedienung und bei der Beobachtung im Zuge einer Navigation mit der Equipmenthierarchie-online überprüfen, ob bei der Bedienung und Beobachtung der jeweiligen Anlageneinrichtungen AE1, AE2, AE3 eine Fehlermeldung 2, 3 vorliegt, der entsprechend berücksichtigt werden muss und wie die Priorisierung 7 bei der Fehlerbehebung der jeweiligen Fehlermeldungen 2, 3 auszusehen hat, angelehnt an die jeweilige verfahrenstechnische Relevanz.

Ferner zeigt FIG 2, dass die Anlagenvorrichtung AV als Erzeugungsanlage zum Erzeugen eines Produkts ausgebildet ist und als Entscheidungskriterium ein aktueller Erzeugungsschritt, in welchem sich das Produkt befindet, bestimmt wird, wobei in Abhängigkeit des aktuellen Erzeugungsschritts von der elektronischen Recheneinrichtung 6 überprüft wird, ob die erste Anlageneinrichtung AE 1 und/oder die zweite Anlageneinrichtung AE2 zum Erzeugen des Produkts weiterhin benötigt wird und abhängig davon die jeweilige Verfahrensrelevanz bestimmt wird. Mit anderen Worten wird die Verfahrensrelevanz dadurch entschieden, ob die erste Anlageneinrichtung AE1 und/oder die zweite Anlageneinrichtung AE2 zur Produktion des Produkts noch weiterhin benötigt werden. Sollte beispielsweise zum Erzeugen des Produkts erst die erste Anlageneinrichtung AE1 benötigt werden und dann die zweite Anlageneinrichtung AE2 benötigt werden und ermittelt werden, dass sich das Produkt bereits in der zweiten Anlageneinrichtung AE2 befindet, wobei dann beispielsweise die erste Fehlermeldung 2 von der ersten Anlageneinrichtung AE1 erzeugt wird und die zweite Fehlermeldung 3 von der zweiten Anlageneinrichtung AE2 erzeugt wird, so kann beispielsweise vorgesehen sein, dass die zweite Verfahrensrelevanz für die zweite Anlageneinrichtung AE2 höher eingestuft wird, da die zweite Anlageneinrichtung AE2 zum Erzeugen des Produkts noch benötigt wird, während die erste Anlageneinrichtung AE1 nicht mehr benötigt wird. Dadurch ist es ermöglicht, dass in Abhängigkeit des aktuellen Herstellungsprozesses und insbesondere in Abhängigkeit des jeweiligen Erzeugungsschritts des aktuellen Erzeugungsprozesses die verfahrenstechnische Relevanz, mit anderen Worten die Verfahrensrelevanz, der jeweiligen Anlageneinrichtung AE!, AE2, AE3 überprüft wird und in Abhängigkeit des aktuellen Erzeugungsschritts dann der jeweiligen Anlageneinrichtung AE1, AE2, AE3 die Verfahrensrelevanz zugewiesen wird und die Priorisierung 7 in Abhängigkeit davon durchgeführt wird. Dadurch ist es ermöglicht, dass Produktionsausfälle und Produktionseinschränkungen möglichst niedrig gehalten werden, wodurch ein verbesserter Betrieb der Anlagenvorrichtung AV ermöglicht ist.

Ferner zeigt die FIG 2, dass die Anlagenvorrichtung AV als Erzeugungsanlage zum Erzeugen eines Produkts ausgebildet ist und als Entscheidungskriterium eine Bewertung der jeweiligen Anlageneinrichtung AE1, AE2, AE3 in Abhängigkeit einer Benutzungshäufigkeit der jeweiligen Anlageneinrichtung AE1, AE2, AE3 während des Erzeugungsprozesses des Produkts durchgeführt wird.

Ferner zeigt FIG 2, dass die erste Fehlermeldung 2 und/oder die zweite Fehlermeldung 3 und/oder die erzeugte Priorisierung 7 der Fehlermeldungen 2, 3 auf der Anzeigeeinrichtung 1 der elektronischen Recheneinrichtung 6 angezeigt werden. Insbesondere ist zu sehen, dass die erste Fehlermeldung 2 und/oder die zweite Fehlermeldung 3 und/oder die Priorisierung 7 der Fehlermeldungen 2, 3 während des Betriebs der Anlagenvorrichtung AV auf einer Anzeigeeinrichtung 1 der elektronischen Recheneinrichtung 6 angezeigt werden.

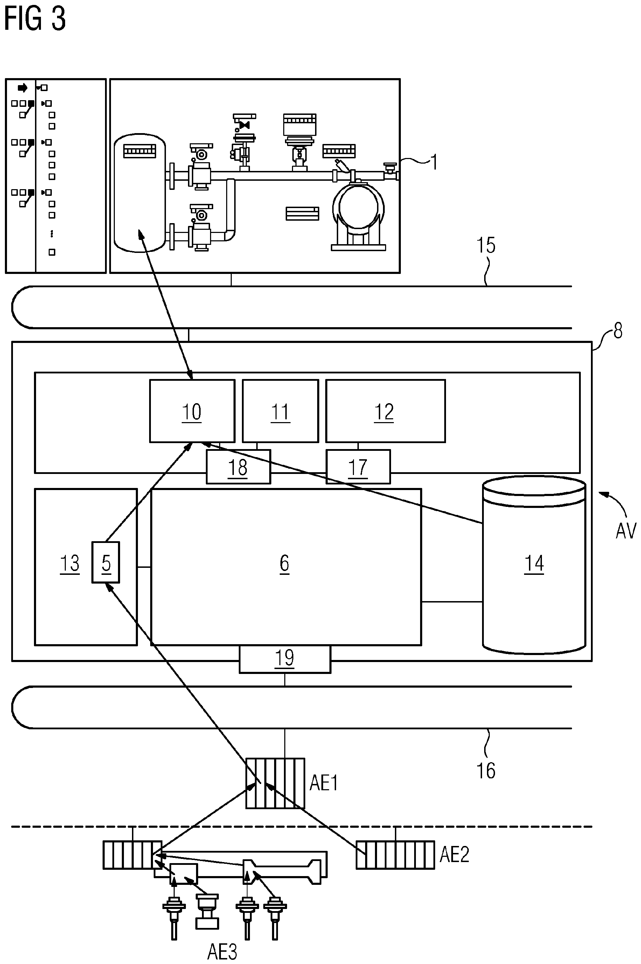

FIG 3 zeigt ein schematisches Blockschaltbild einer Ausführungsform einer Anlagenvorrichtung AV zur Integration der Equipmenthierarchie-online in einem Operation Station Server 8, welcher auch als Operatorserver bezeichnet werden kann, und der Anzeigeeinrichtung 1. Der Operation Station Server 8 weist hierzu eine Visualisierungseinrichtung auf. Die Visualisierungseinrichtung wiederum weist die Equipmenthierarchie 10, eine Displayhierarchie 11 und ein Prozessobjekt 12 auf. Die Equipmenthierarchie 10 wiederum ist mit einem Diagnosemanager 13 des Operation Station Servers 8 gekoppelt sowie mit der Anzeigeeinrichtung 1. Ferner hat die Equipmenthierarchie 10 Zugriff auf entsprechender Ressourcen 14. Der Operation Station Server 8 wiederum ist mit einem Bus-System 15 mit der Anzeigeeinrichtung 1 gekoppelt. Ferner ist zur Steuerung der jeweiligen Anlageneinrichtungen AE1, AE2, AE3 der Operation Station Server 8 mit einem weiteren Bus-System 16 gekoppelt. Ferner ist insbesondere der Diagnosemanager 13 mit den Diagnosebäumen 5 ausgestattet. Insbesondere kann weiterhin vorgesehen sein, dass der Operation Station Server 8 die elektronische Recheneinrichtung 6 aufweisen kann, mittels welcher beispielsweise entsprechende Anzeigen oder Events gemanaged werden können.

Ferner erweist die Visualisierungseinrichtung einen Alarm DS 17 und einen Tag DS 18 auf. Der Operation Station Server 8 wiederum weist insbesondere einen AS Treiber 19 auf.

FIG 3 zeigt insbesondere die Architektur und Integration der Equipmenthierarchie 10 in dem Operation Station Server 8 und der Anzeigeeinrichtung 1, um die Ermittlung der verfahrenstechnischen Relevanz von Gerätediagnosedaten zur Laufzeit für eine effiziente Koordination von Wartungsabläufen zu ermöglichen. Wie bereits erläutert, wird die automatisch im Engineering und Gerätezuweisung erweiterte Equipmenthierarchie-online Konfiguration entsprechend auf dem Operation Station Server 8 geladen, die wiederum durch die Softwarekomponente, insbesondere durch die Equipmenthierarchie 10, konsumiert und entsprechend visualisiert werden kann. Darüber hinaus bezieht die Equipmenthierarchie 10 die zugewiesenen Anlageneinrichtungen AE1, AE2, AE3 und die jeweiligen Gerätediagnosedaten aus dem Diagnosebaum 5 vom Diagnosemanager 13, um diese entsprechend an der Anzeigeeinrichtung 1 visualisieren zu können.

## Patentansprüche

1. Verfahren zum Betreiben einer Anlagenvorrichtung (AV), die als Erzeugungsanlage zum Erzeugen eine Produkts ausgebildet ist, mit zumindest einer ersten Anlageneinrichtung (AE1) und zumindest einer zur ersten Anlageneinrichtung (AE1) separaten zweiten Anlageneinrichtung (AE2), bei welchem von der ersten Anlageneinrichtung (AE1) eine erste Fehlermeldung (2) und von der zweiten Anlageneinrichtung (AE2) eine zweite Fehlermeldung (3) erzeugt werden und die erste Fehlermeldung (2) und die zweite Fehlermeldung (3) an eine elektronische Recheneinrichtung (6) der Anlagenvorrichtung (AV) zum Überwachen der Anlagenvorrichtung (AV) übertragen werden,
**dadurch gekennzeichnet, dass**
von der elektronischen Recheneinrichtung (6) in Abhängigkeit eines Entscheidungskriteriums, wobei als Entscheidungskriterium ein aktueller Erzeugungsschritt, in welchem sich das Produkt befindet, bestimmt wird, überprüft wird, ob die erste Anlageneinrichtung (AE1) und die zweite Anlageneinrichtung (AE2) zum Erzeugen des Produkts weiterhin benötigt werden und abhängig davon eine erste Verfahrensrelevanz und eine zweite Verfahrensrelevanz bestimmt werden, und wobei von der elektronischen Recheneinrichtung (6) zumindest die erste Verfahrensrelevanz der ersten Anlageneinrichtung (AE1) und die zweite Verfahrensrelevanz der zweiten Anlageneinrichtung (AE2) zugewiesen werden und in Abhängigkeit der jeweiligen zugewiesenen Verfahrensrelevanz eine Priorisierung (7) der jeweiligen Fehlermeldung (2, 3) erzeugt wird.

2. Verfahren zum Betreiben einer Anlagenvorrichtung (AV), die als Erzeugungsanlage zum Erzeugen eines Produkts ausgebildet ist, mit zumindest einer ersten Anlageneinrichtung (AE1) und zumindest einer zur ersten Anlageneinrichtung (AE1) separaten zweiten Anlageneinrichtung (AE2), bei welchem von der ersten Anlageneinrichtung (AE1) eine erste Fehlermeldung (2) und von der zweiten Anlageneinrichtung (AE2) eine zweite Fehlermeldung (3) erzeugt werden und die erste Fehlermeldung (2) und die zweite Fehlermeldung (3) an eine elektronische Recheneinrichtung (6) der Anlagenvorrichtung (AV) zum Überwachen der Anlagenvorrichtung (AV) übertragen werden,
**dadurch gekennzeichnet, dass**
von der elektronischen Recheneinrichtung (6) in Abhängigkeit eines Entscheidungskriteriums, zumindest eine erste Verfahrensrelevanz der ersten Anlageneinrichtung (AE1) und eine zweite Verfahrensrelevanz der zweiten Anlageneinrichtung (AE2) zugewiesen werden und in Abhängigkeit der jeweiligen zugewiesenen Verfahrensrelevanz eine Priorisierung (7) der jeweiligen Fehlermeldung (2, 3) erzeugt wird, wobei als Entscheidungskriterium eine Bewertung der jeweiligen Anlageneinrichtung (AE1, AE2, AE3) in Abhängigkeit einer Benutzungshäufigkeit der jeweiligen Anlageneinrichtung (AE1, AE2, AE3) während des Erzeugungsprozesses des Produkts durchgeführt wird.

3. Verfahren nach einem der vorhergehenden Ansprüche, **dadurch gekennzeichnet, dass** die erste Fehlermeldung (2) und/oder die zweite Fehlermeldung (3) und/oder die erzeugte Priorisierung (7) der Fehlermeldungen (2, 3) auf einer Anzeigeeinrichtung (1) der elektronischen Recheneinrichtung (6) angezeigt werden.

4. Verfahren nach einem der vorhergehenden Ansprüche, **dadurch gekennzeichnet, dass** die erste Fehlermeldung (2) und/oder die zweite Fehlermeldung (3) und/oder die Priorisierung (7) der Fehlermeldung (2, 3) während eines Betriebs der Anlagenvorrichtung (AV) auf einer Anzeigeeinrichtung (1) der elektronischen Recheneinrichtung (6) angezeigt werden.

5. Verfahren nach Anspruch 3 oder 4, **dadurch gekennzeichnet, dass** zusätzlich ein erstes Piktogramm für die erste Anlageneinrichtung (AE1) und ein zweites Piktogramm für die zweite Anlageneinrichtung (AE2) auf der Anzeigeeinrichtung (1) angezeigt werden, wobei die jeweilige Fehlermeldung (2, 3) und Priorisierung (7) als zusätzliche Information (4) des ersten Piktogramms und/oder des zweiten Piktogramms angezeigt werden.

6. Verfahren nach einem der Ansprüche 3 bis 5, **dadurch gekennzeichnet, dass** in Abhängigkeit der Priorisierung (7) die erste Fehlermeldung (2) und/oder die zweite Fehlermeldung (3) auf der Anzeigeeinrichtung (1) ausgeblendet oder eingeblendet werden.

7. Verfahren nach einem der vorhergehenden Ansprüche, **dadurch gekennzeichnet, dass** die erste Fehlermeldung (2) und/oder die zweite Fehlermeldung (3) mittels eines jeweiligen Diagnosebaumes (5) für jede der Anlageneinrichtungen (AE1, AE2, AE3) ausgewertet wird.

8. Verfahren nach einem der vorhergehenden Ansprüche, **dadurch gekennzeichnet, dass** in Abhängigkeit der erzeugten Priorisierung (7) eine dritte Anlageneinrichtung (AE3) der Anlagenvorrichtung (AV) gestartet wird, wobei die erste Anlageneinrichtung (AE1) und/oder die zweite Anlageneinrichtung (AE2) im Betrieb der Anlagenvorrichtung (AV) durch die dritte Anlageneinrichtung (AE3) ersetzt wird.

9. Anlagenvorrichtung (AV) mit zumindest einer ersten Anlageneinrichtung (AE1), mit zumindest einer zweiten Anlageneinrichtung (AE2) und mit einer elektronischen Recheneinrichtung (6), wobei die Anlagenvorrichtung (AV) zum Durchführen eines Verfahrens nach einem der Ansprüche 1 bis 8 ausgebildet ist.

## Claims

1. Method for operating a plant apparatus (AV), which is designed as a production plant for producing a product, having at least one first plant device (AE1) and at least one second plant device (AE2) separate from the first plant device (AE1), in which a first error message (2) is generated by the first plant device (AE1) and a second error message (3) is generated by the second plant device (AE2) and the first error message (2) and the second error message (3) are transmitted to an electronic computing device (6) of the plant apparatus (AV) for monitoring the plant apparatus (AV),
**characterised in that**
the electronic computing device (6), depending on a decision-making criterion, wherein a current generation step at which the product finds itself is determined as a decision-making criterion, checks whether the first plant device (AE1) and the second plant device (AE2) are still required to produce the product and depending thereon, a first procedural relevance and a second procedural relevance are determined, and wherein at least the first procedural relevance is assigned to the first plant device (AE1) and the second procedural relevance is assigned to the second plant device (AE2) by the electronic computing device (6) and depending on the respective assigned procedural relevance, a prioritisation (7) of the respective error message (2, 3) is generated.

2. Method for operating a plant apparatus (AV), which is designed as a production plant for producing a product, having at least one first plant device (AE1) and at least one second plant device (AE2) separate from the first plant device (AE1), in which a first error message (2) is generated by the first plant device (AE1) and a second error message (3) is generated by the second plant device (AE2) and the first error message (2) and the second error message (3) are transmitted to an electronic computing device (6) of the plant apparatus (AV) for monitoring the plant apparatus (AV),
**characterised in that**
at least a first procedural relevance is assigned to the first plant device (AE1) and a second procedural relevance is assigned to the second plant device (AE2) by the electronic computing device (6) depending on a decision-making criterion and depending on the respective assigned procedural relevance, a prioritisation (7) of the respective error message (2, 3) is generated, wherein an evaluation of the respective plant device (AE1, AE2, AE3) is performed as a decision-making criterion as a function of the frequency of use of the respective plant device (AE1, AE2, AE3) during the production process of the product.

3. Method according to one of the preceding claims, **characterised in that** the first error message (2) and/or the second error message (3) and/or the generated prioritisation (7) of the error messages (2, 3) are displayed on a display device (1) of the electronic computing device (6).

4. Method according to one of the preceding claims, **characterised in that** the first error message (2) and/or the second error message (3) and/or the prioritisation (7) of the error messages (2, 3) are displayed on a display device (1) of the electronic computing device (6) during the operation of the plant apparatus (AV).

5. Method according to claim 3 or 4, **characterised in that** in addition a first pictogram for the first plant device (AE1) and a second pictogram for the second plant device (AE2) are displayed on the display device (1), wherein the respective error message (2, 3) and prioritisation (7) are displayed as additional information (4) of the first pictogram and/or the second pictogram.

6. Method according to one of claims 3 to 5, **characterised in that** depending on prioritisation (7) the first error message (2) and/or the second error message (3) are masked or inserted on the display device (1).

7. Method according to one of the preceding claims, **characterised in that** the first error message (2) and/or the second error message (3) are evaluated by means of a respective diagnostic tree (5) for each of the plant devices (AE1, AE2, AE3).

8. Method according to one of the preceding claims, **characterised in that** a third plant device (AE3) of the plant apparatus (AV) is started as a function of the generated prioritisation (7), wherein the first plant device (AE1) and/or the second plant device (AE2) is replaced by the third plant device (AE3) during the operation of the plant apparatus (AV).

9. Plant apparatus (AV) having at least one first plant device (AE1), having at least one second plant device (AE2) and an electronic computing device (6), wherein the plant apparatus (AV) is designed to carry out a method according to one of claims 1 to 8.

## Revendications

1. Procédé pour faire fonctionner une installation (AV), qui est constituée en installation de production pour la production d'un produit, comprenant au moins un premier dispositif (AE1) de l'installation et au moins un deuxième dispositif (AE2) de l'installation distinct du premier dispositif (AE1) de l'installation, dans lequel on produit, par le premier dispositif (AE1) de l'installation, un premier message (2) de défaut et, par le deuxième dispositif (AE2) de l'installation, un deuxième message (3) de défaut et on transmet le premier message (2) et le deuxième message (3) de défaut à un dispositif (6) électronique de calcul de l'installation (AV) pour le contrôle de l'installation (AV),
**caractérisé en ce que**
on contrôle, par le dispositif (6) électronique de calcul, en fonction d'un critère de décision, dans lequel on définit, comme critère de décision, un stade en cours de production, dans lequel se trouve le produit, si on continue à utiliser le premier dispositif (AE1) de l'installation et le deuxième dispositif (AE2) de l'installation pour la production du produit, et en fonction de cela, on détermine une première pertinence de procédé et une deuxième pertinence de procédé, et dans lequel on affecte, par le dispositif (6) électronique de calcul, au moins la première pertinence de procédé au premier dispositif (AE1) de l'installation et la deuxième pertinence de procédé au deuxième dispositif (AE2) de l'installation, et en fonction de la pertinence de procédé respective affectée, on donne une priorité (7) au message (2, 3) respectif de défaut.

2. Procédé pour faire fonctionner une installation (AV), qui est constituée en installation de production pour la production d'un produit, comprenant au moins un premier dispositif (AE1) de l'installation et au moins un deuxième dispositif (AE2) de l'installation distinct du premier dispositif (AE1) de l'installation, dans lequel on produit, par le premier dispositif (AE1) de l'installation, un premier message (2) de défaut et, par le deuxième dispositif (AE2) de l'installation, un deuxième message (3) de défaut et on transmet le premier message (2) et le deuxième message (3) de défaut à un dispositif (6) électronique de calcul de l'installation (AV) pour le contrôle de l'installation (AV),
**caractérisé en ce que**
on affecte, par le dispositif (6) électronique de calcul en fonction d'un critère de décision, au moins une première pertinence de procédé au premier dispositif (AE1) de l'installation et une deuxième pertinence de procédé au deuxième dispositif (AE2) de l'installation et on donne, en fonction de la pertinence de procédé respective affectée, une priorité (7) au message (2, 3) respectif de défaut, dans lequel, comme critère de décision, on effectue une évaluation du dispositif (AE1, AE2, AE3) respectif de l'installation, en fonction d'une fréquence d'utilisation du dispositif (AE1, AE2, AE3) respectif de l'installation pendant le processus de production du produit.

3. Procédé suivant l'une des revendications précédentes, **caractérisé en ce que** l'on affiche le premier message (2) de défaut et/ou le deuxième message (3) de défaut et/ou la priorité (7) obtenue des messages (2, 3) de défaut sur un dispositif (1) d'affichage du dispositif (6) électronique de calcul.

4. Procédé suivant l'une des revendications précédentes, **caractérisé en ce que** l'on affiche le premier message (2) de défaut et/ou le deuxième message (3) de défaut et/ou la priorité (7) des messages (2, 3) de défaut pendant un fonctionnement de l'installation (AV) sur un dispositif (1) d'affichage du dispositif (6) électronique de calcul.

5. Procédé suivant la revendication 3 ou 4, **caractérisé en ce que** l'on affiche en outre un premier pictogramme pour le premier dispositif (AE1) de l'installation et un deuxième pictogramme pour le deuxième dispositif (AE2) de l'installation sur le dispositif (1) d'affichage, dans lequel on affiche le message (2, 3) respectif de défaut et la priorité (7) comme information (4) supplémentaire du premier pictogramme et/ou du deuxième pictogramme.

6. Procédé suivant l'une des revendications 3 à 5, **caractérisé en ce que**, en fonction de la priorité (7), on supprime ou on superpose le premier message (2) de défaut et/ou le deuxième message (3) de défaut sur le dispositif (1) d'affichage.

7. Procédé suivant l'une des revendications précédentes, **caractérisé en ce que** l'on analyse le premier message (2) de défaut et/ou le deuxième message (3) de défaut, au moyen d'un arbre (5) de diagnostic, pour chacun des dispositifs (AE1, AE2, AE3) de l'installation.

8. Procédé suivant l'une des revendications précédentes, **caractérisé en ce que**, en fonction de la priorité (7) donnée, on démarre un troisième dispositif (AE3) de l'installation (AV), dans lequel on remplace le premier dispositif (AE1) de l'installation et/ou le deuxième dispositif (AE2) de l'installation, alors que l'installation (AV) fonctionne, par le troisième dispositif (AE3) de l'installation.

9. Installation (AV) comprenant au moins un premier dispositif (AE1) de l'installation, comprenant au moins un deuxième dispositif (AE2) de l'installation et comprenant un dispositif (6) électronique de calcul, dans lequel l'installation (AV) est constituée pour effectuer un procédé suivant l'une des revendications 1 à 8.
